# EUROPEAN PATENT SPECIFICATION

(11) **EP 3 550 865 B1**
(45) Date of publication and mention of the grant of the patent: **03.05.2023**
(21) Application number: 19173284.1
(22) Date of filing: 21.03.2017
(51) Int. Cl.: H04W 4/70, H04W 40/00

(54) **HIGH LATENCY COMMUNICATION VIA SCEF**
KOMMUNIKATION MIT HOHER LATENZ ÜBER SCEF
COMMUNICATION À LATENCE ÉLEVÉE VIA SCEF

(30) Priority: 31.03.2016 US 201662315805 P
(43) Date of publication of application: 09.10.2019
(62) Divisional of application: 17713210.7
(73) Proprietor: Telefonaktiebolaget LM Ericsson (publ), 164 83 Stockholm (SE)
(72) Inventor: RÖNNEKE, Hans, 434 34 Kungsbacka (SE); HEDMAN, Peter, 252 50 Helsingborg (SE)
(74) Representative: Ericsson

(56) References cited:
- EP-A1- 3 001 702
- ALCATEL-LUCENT ET AL: "Introduction of non-IP data delivery via the SCEF for cellular IoT", 3GPP DRAFT; S2-160481 23 682 CR0154REV6 MT NIDD PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Riga; 20160125 - 20160129 19 January 2016 (2016-01-19), XP051072344, Retrieved from the Internet: URL:http://www.3gpp.org/ftp/tsg_sa/WG2_Arc h/TSGS2_113_St_Kitts/Docs/ [retrieved on 2016-01-19]

## Description

### Technical Field

The present disclosure relates to a cellular communications network and, in particular, to delivery of data in a cellular communications network.

### Background

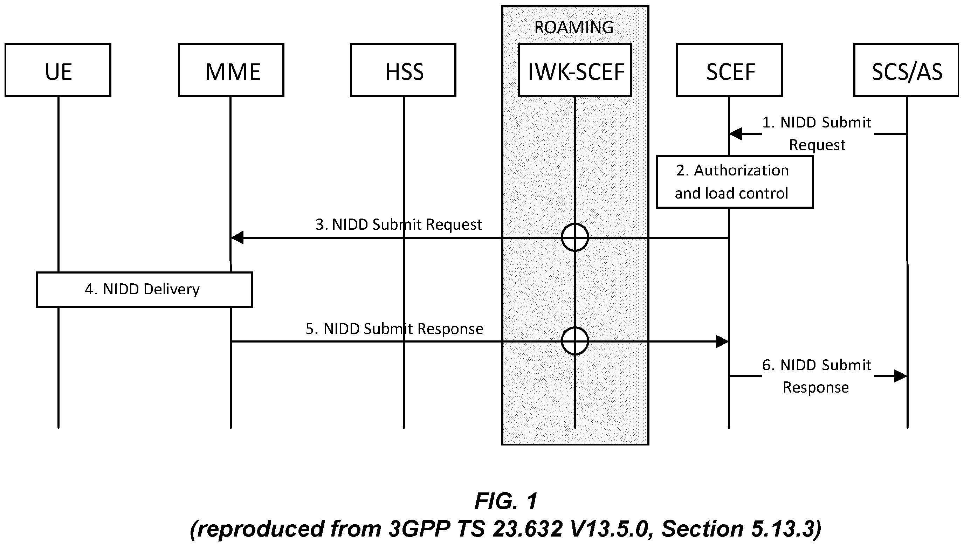

The Third Generation Partnership Project (3GPP) specifications have recently provided support for Non-Internet Protocol (IP) (Non-IP) Data Delivery (NIDD) as part of the Cellular Internet of Things (CIoT) Evolved Packet System (EPS) optimizations. In particular, 3GPP Technical Specification (TS) 23.682 V13.5.0, clause 5.13.3 defines a "Mobile Terminated Non-Internet Protocol (IP) Data Delivery (NIDD) procedure," which is illustrated in **Figure 1****.** In this procedure, a Service Capability Server (SCS) / Application Server (AS) sends non-IP data to a particular User Equipment device (UE) as identified by an External Identifier or Mobile Station (MS) International Subscriber Directory Number (ISDN) (MSISDN).

The 3GPP specifications also define a number of power saving features for UEs, such as Machine Type Communication (MTC) UEs, which will play an important role in the CIoT. Two of these features are extended Discontinuous Reception (eDRX) and Power Saving Mode (PSM). The principles for eDRX and PSM are in short to save energy by letting the eDRX and/or PSM capable UEs only listen to radio transmission during short periods of time. This also means that the UEs are only susceptible for paging during these short periods.

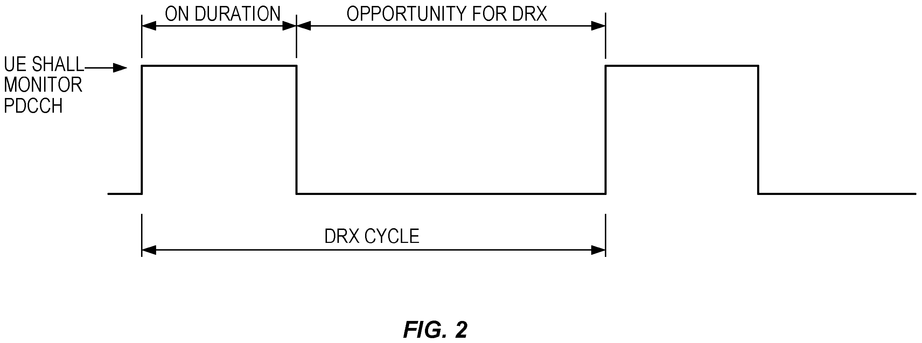

More specifically, **Figure 2** is a graphical illustration of a Discontinuous Reception (DRX) cycle. As seen from Figure 2, a UE monitors the Physical Downlink Control Channel (PDCCH) during the DRX ON duration of the DRX cycle. While in DRX mode (i.e., when the UE is in the DRX OFF state), the UE remains in a low-power consumption mode. For DRX, the UE will only periodically monitor the PDCCH and then for only a rather short time. The periodicity at which the UE monitors the PDCCH is decided by the DRX cycle. For each DRX cycle, one Paging Occasion (PO) will occur during which the UE is susceptible for paging. In particular, during the DRX cycle, the UE is operational for a certain period of time when all the scheduling and paging information is transmitted. This period of time is referred to as the DRX ON duration. During the DRX ON duration, the UE is referred to herein as being in the DRX ON state. During another period of time in the DRX cycle, the network (e.g., the enhanced or evolved Node B (eNB) (i.e., the base station) and a core network node such as the Mobility Management Entity (MME)) knows that the UE is completely turned off and is not able to receive anything. This period of time is referred to as the DRX time or DRX OFF duration. Further, during the DRX time, the UE is referred to herein as being in the DRX OFF state, or simply the OFF state. Except when in DRX OFF, the UE radio must be active to monitor PDCCH (e.g., to identify, e.g., paging requests). During DRX OFF, the UE radio can be turned off, and the eNB will not schedule the UE nor will the MME page the UE as they know that the UE radio is not active. The DRX ON duration is defined by an onDurationTimer and, as such, the DRX ON duration is sometimes referred to herein as onDurationTimer. The onDurationTimer specifies the number of consecutive PDCCH subframe(s) at the beginning of a DRX cycle during which the UE is to be in the ON state in order to monitor for a PDCCH transmission. For eDRX, the DRX cycle (sometimes referred to herein as the eDRX cycle) can be as long as 52 minutes. As such, eDRX functionality is an effective way to reduce the UE's battery power usage.

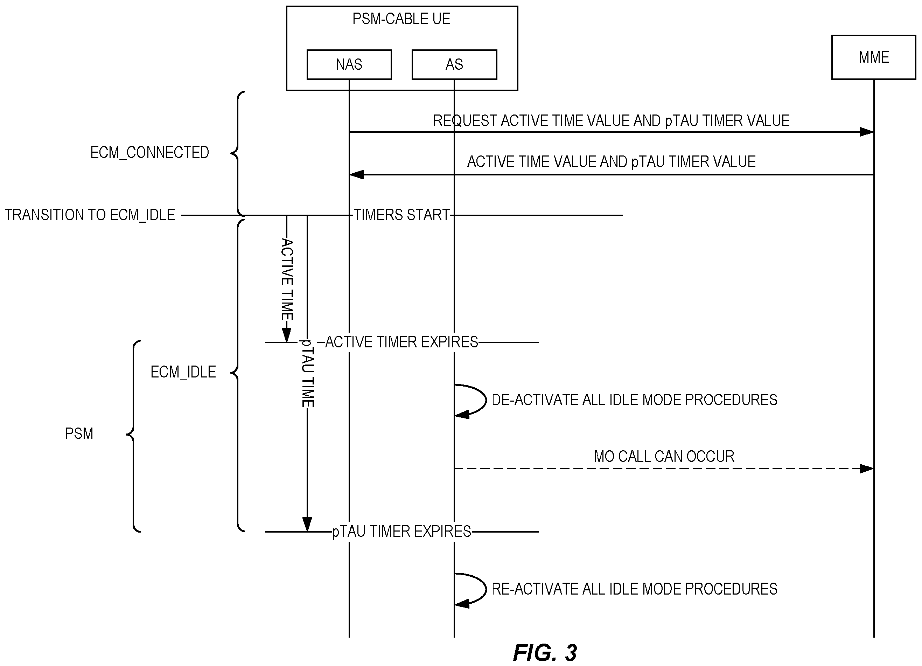

**Figure 3** illustrates PSM as defined by 3GPP. As illustrated, if a PSM-capable UE desires to use PSM, the UE (specifically the UE Non-Access Stratum (NAS)) sends a request to the MME of the cellular communications network for an Active Time value and optionally a periodic Tracking Area Update (pTAU) Timer value. If PSM is acceptable for the UE, then the MME returns an Active Time value and a pTAU Timer value. Upon transitioning from CONNECTED mode (referred to as ECM_CONNECTED) to IDLE mode (referred to as ECM_IDLE), the UE starts an Active Timer that is set to the Active Time value and a pTAU Timer that is set to the pTAU Timer value received from the MME. The radio of the UE remains active, and the UE performs normal IDLE mode procedures until the Active Timer has expired. Once the Active Timer expires, the UE deactivates the radio of the UE, and the UE enters PSM. During PSM, a Mobile Originating (MO) call can occur, in which case the UE (specifically the UE AS) re-activates IDLE mode procedures. Once the pTAU timer expires, the UE (specifically the UE AS) resumes IDLE mode procedures, thereby exiting PSM.

Thus, for PSM, the UE listens to the radio for only a short while (i.e., during the Active Time) after having transitioned from CONNECTED mode to IDLE mode. The UE returns to CONNECTED mode when the UE wishes to send data or when it is time to send a pTAU (and/or a periodic Routing Area Update (pRAU)). The UE may also transition back to CONNECTED mode from IDLE mode as a consequence of being paged during its Active Time. To further reduce energy consumption, MTC devices that only send data at certain predefined periods may set the pTAU/pRAU timeout slightly longer than the uplink data time period since this would mean that sending of pTAUs/pRAUs can be omitted, thereby further reducing power consumption.

As a result of eDRX and PSM, UEs may not be available for delivery of non-IP data according to the mobile terminated NIDD procedure of Figure 1. In particular, when the MME receives the NIDD Submit Request, which includes the non-IP data to be delivered to a particular UE, in step 3 of Figure 1, the MME may be unable to reach that UE because that UE is in the DRX OFF state (for eDRX) or in PSM (for PSM operation). Thus, the current mobile terminated NIDD procedure specified in 3GPP TS 23.682 V13.5.0 does not present an efficient way of handling power saving devices (i.e., devices operating in PSM and eDRX).

Additional background information can e.g. be found in the following two (2) documents:
A first document "ALCATEL-LUCENT ET AL: 'Introduction of non-IP data delivery via the SCEF for cellular loT',3GPP DRAFT; S2-160481 23 682 CR0154REV6 MT NIDD PROCEDURES, 3RD GENERATION PARTNERSHIP PROJECT (3GPP), 19 January 2016, XP051 072344" is directed to the introduction of non-IP data delivery via the SCEF for cellular loT. The document describes a Non-Internet Protocol (IP) Data Delivery (NIDD) via the SCEF, which includes changes to allow NIDD configuration while the UE is not attached, and changes to have the MME/IWK-SCEF notify the SCEF of the MME/IWK-SCEF address for MT NIDD when the MME becomes the Serving MME, either due to attach or to mobility, and changes to split it into two procedures, one without retransmission and one with retransmission, and changes to notify the SCEF directly by the MME/IWK-SCEF of the assignment of an MME/IWK-SCEF with respect to the UE. The aim is to reduce signalling from the HSS. This notification is used both for attach and mobility. Changes are also included with respect to exchange of information between the MME and SCEF regarding retransmission of MT NIDD to handle the case where the UE is unavailable due to, for example, eDRX. The procedures affected are: configuration for NIDD procedure; MO NIDD procedure; and MT NIDD procedures.

A second patent document EP 3 001 702 A1 (Alcatel Lucent) is directed to a method for support of mobile-terminated application services in a mobile system, said method comprising: - based on a User Equipment UE subscription, enabling, for one or more subscribed Access Point Name APN, triggering of at least one network Application associated with a given of said one or more APN, upon said UE being reachable again after failure of a mobile network procedure to reach said UE via a Packet Data Network PDN connection established for said UE and said APN.

### Summary

With the introduction of control plane Cellular Internet of Things (CIoT) Evolved Packet System (EPS) Optimizations in Third Generation Partnership Project (3GPP) Release 13, there is a problem of how downlink user data shall be handled in case the receiving device uses a power saving function such as Power Saving Mode (PSM) or Extended Discontinuous Reception (eDRX).

A buffer handling that is aligned with treatment of downlink data via a Serving Gateway (S-GW) / Packet Data Network (PDN) Gateway (P-GW) is introduced. Added signaling to manage buffering when CIoT User Equipment devices (UEs) are using PSM or eDRX is also provided.

Introduced buffering in the serving network Inter-Working (IWK) Service Capability Exposure Function (SCEF) acts to avoid data loss of mobility over Mobility Management Entity (MME) service areas when data is buffered in the MME.

The present invention is defined by the appended claims. Embodiments, which do not fall within the scope of the appended set of claims are to be interpreted as background information, useful for understanding the invention.

Another embodiment is directed to a core network node for a cellular communications network. The core network node provides delivery of non-IP data and comprises: a request reception module operable to *receive* a NIDD submit request comprising non-IP data and an identifier of a wireless device to which the non-IP data is to be delivered; and a response transmission module operable to, upon determining that the wireless device is not reachable, *send* a NIDD submit response that indicates that the non-IP data was not delivered to the wireless device; and where the reception module is operable to, upon determining that the wireless device is reachable, send a NIDD submit indication indicating that the wireless device is reachable.

Another embodiment is directed to a method in a network node for delivery of non-IP data. The method comprises: *receiving* a first NIDD submit request comprising non-IP data and an identifier of a wireless device to which the non-IP data is to be delivered; and *sending* a second NIDD submit request to a mobility management entity, the second request comprising the non-IP data and an identifier of the wireless device to which the non-IP data is to be delivered; and *receiving* a first NIDD submit response from the mobility management entity that indicates that the non-IP data was not delivered to the wireless device.

Another embodiment is directed to a network node for a cellular communications network. The network node provides delivery of non-IP data and comprises: a network interface; one or more processors; and memory storing instructions executable by the one or more processors whereby the network node is operable to: *receive* a first NIDD submit request comprising non-IP data and an identifier of a wireless device to which the non-IP data is to be delivered; and *send* a second NIDD submit request to a mobility management entity, the second NIDD submit request comprising the non-IP data and an identifier of the wireless device to which the non-IP data is to be delivered; and *receive* a first NIDD submit response from the mobility management entity that indicates that the non-IP data was not delivered to the wireless device.

Another embodiment is directed to a network node for a cellular communications network. The network node provides delivery of non-IP data and is adapted to: *receive* a first NIDD submit request comprising non-IP data and an identifier of a wireless device to which the non-IP data is to be delivered; and *send* a second NIDD submit request to a mobility management entity, the second request comprising the non-IP data and an identifier of the wireless device to which the non-IP data is to be delivered; and *receive* a first NIDDF submit response from the mobility management entity that indicates that the non-IP data was not delivered to the wireless device.

Another embodiment is directed to a network node for a cellular communications network. The network node provides delivery of non-IP data and comprises: means for receiving a first NIDD submit request comprising non-IP data and an identifier of a wireless device to which the non-IP data is to be delivered; and means for sending a second NIDD submit request to a mobility management entity, the second request comprising the non-IP data and an identifier of the wireless device to which the non-IP data is to be delivered; and means for receiving a first NIDD submit response from the mobility management entity that indicates that the non-IP data was not delivered to the wireless device.

Another embodiment is directed to a network node for a cellular communications network. The network node provides delivery of non-IP data and comprises: a request reception module operable to *receive* a first NIDD submit request comprising non-IP data and an identifier of a wireless device to which the non-IP data is to be delivered; and a request sending module operable to *send* a second NIDD submit request to a mobility management entity, the second request comprising the non-IP data and an identifier of the wireless device (18) to which the non-IP data is to be delivered; and a response reception module operable to *receive* a first NIDD submit response from the mobility management entity that indicates that the non-IP data was not delivered to the wireless device.

Those skilled in the art will appreciate the scope of the present disclosure and realize additional aspects thereof after reading the following detailed description of the embodiments in association with the accompanying drawing figures.

### Brief Description of the Drawings

The accompanying drawing figures incorporated in and forming a part of this specification illustrate several aspects of the disclosure, and together with the description serve to explain the principles of the disclosure.
- **Figure 1**: illustrates a Mobile Terminated Non-Internet Protocol (Non-IP) Data Delivery (NIDD) procedure as defined in Third Generation Partnership Project (3GPP) Technical Specification (TS) 23.682 V13.5.0;
- **Figure 2**: illustrates Discontinuous Reception (DRX) and, in particular, extended DRX (eDRX) as provided by the 3GPP specifications;
- **Figure 3**: illustrates Power Saving Mode (PSM) as provided by the 3GPP specifications;
- **Figure 4**: illustrates one example of a cellular communications network in which embodiments of the present disclosure are implemented;
- **Figure 5**: illustrates a mobile terminated NIDD procedure that efficiently handles power saving devices according to some embodiments of the present disclosure;
- **Figures 6** and **7**: are block diagrams of example embodiments of a network node;
- **Figures 8** and **9**: are block diagrams of example embodiments of a wireless device.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" is any node in a radio access network of a cellular communications network that operates to wirelessly transmit and/or receive signals. Some examples of a radio access node include, but are not limited to, a base station (e.g., an enhanced or evolved Node B (eNB) in a Third Generation Partnership Project (3GPP) Long Term Evolution (LTE) network), a high-power or macro base station, a low-power base station (e.g., a micro base station, a pico base station, a home eNB, or the like), and a relay node.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP LTE network and a Machine Type Communication (MTC) device.

**Network Node:** As used herein, a "network node" is any node that is either part of the radio access network or the core network of a cellular communications network/system.

**Non-Internet Protocol (Non-IP) Data:** As used herein, "non-IP data" is data that is unstructured from, e.g., the standpoint of the Evolved Packet System (EPS) in a 3GPP network. For example, the term "non-IP data" is commonly used in the 3GPP specifications such as the above mentioned 3GPP TS 23.682 V13.5.0.

Note that the description given herein focuses on a 3GPP cellular communications system and, as such, 3GPP LTE terminology or terminology similar to 3GPP LTE terminology is oftentimes used. However, the concepts disclosed herein are not limited to a LTE nor to a 3GPP system.

Note that, in the description herein, reference may be made to the term "cell;" however, particularly with respect to Fifth Generation (5G) concepts, beams may be used instead of cells and, as such, it is important to note that the concepts described herein are equally applicable to both cells and beams.

With the introduction of control plane Cellular Internet of Things (CIoT) EPS optimizations in 3GPP Release 13, there is a problem of how downlink user data shall be handled in case the receiving device uses a power saving function such as Power Saving Mode (PSM) or Extended Discontinuous Reception (eDRX). In particular, the current mobile terminated Non-IP Data Delivery (NIDD) procedure specified in 3GPP Technical Specification (TS) 23.682 V13.5.0 does not present an efficient way of handling power saving devices (i.e., devices operating in PSM and eDRX). Much signaling is required using the monitoring events and the non-IP data will be buffered in the home network Service Capability Exposure Function (SCEF). In addition, for the Mobility Management Entity (MME), the proposed handling of downlink data originating from the SCEF differs from the handling of downlink data originating from the Serving Gateway (S-GW) / Packet Data Network (PDN) Gateway (P-GW). This adds to the complexity of the MME implementation.

The present disclosure uses some principles from a buffer handling between the MME and the S-GW (see 3GPP TS 23.401 V13.6.0, clause 5.3.4.3 "Network Triggered Service Request," e.g. step 2). The present disclosure uses a modified version of that for the SCEF / Inter-Working (IWK) SCEF buffering that is handled from the MME.

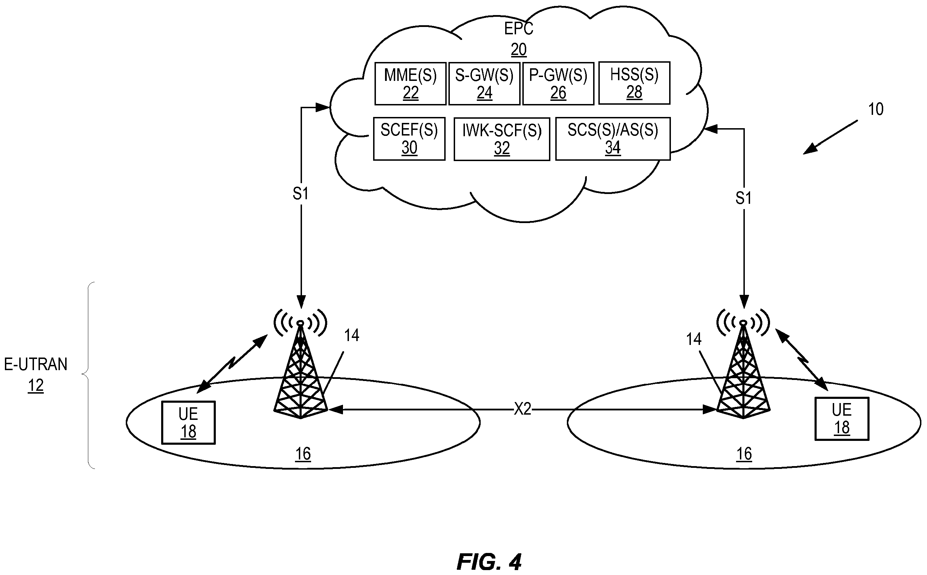

**Figure 4** illustrates one example of a cellular communications network 10 in which embodiments of the present disclosure can be implemented. In this example, the cellular communications network 10 is a 3GPP LTE network; however, the present disclosure is not limited thereto. As illustrated, the cellular communications network 10 includes a Radio Access Network (RAN), which in this example is an Enhanced or Evolved Universal Terrestrial RAN (E-UTRAN) 12. The E-UTRAN 12 includes a number of base stations, which in 3GPP terminology are referred to as eNBs 14, that serve corresponding cells 16. The eNBs 14 provide radio access to wireless devices, which in 3GPP terminology are referred to as UEs 18, located in the respective cells 16. The eNBs 14 communicate via a base-station-to-base-station interface, which in 3GPP LTE is referred to as an X2 interface. The eNBs 14 are also connected to a core network, which in 3GPP LTE is referred to as an Evolved Packet Core (EPC) 20, via S1 interfaces.

The EPC 20 includes various core network nodes including, for example, one or more MMEs 22, one or more S-GWs 24, one or more P-GWs 26, one or more Home Subscriber Servers (HSSs) 28, one or more SCEFs 30, one or more IWK-SCEFs 32, and one or more Service Capability Servers (SCSs) / Application Servers (ASs) 34.

In some embodiments, at least some of the UEs 18 have power saving feature capabilities (e.g., eDRX capability and/or PSM capability). Further, in some particular embodiments, the UEs 18 are MTC devices such as devices operating in the CIoT.

As discussed above, 3GPP specifications now support NIDD as part of the EPS optimizations for the CloT. In particular, 3GPP TS 23.682 V13.5.0 defines a mobile terminated NIDD procedure in which non-IP data is delivered from the SCS/AP 34 to a particular UE 18. However, if the UE 18 has eDRX and/or PSM capabilities, then the UE 18 may not be reachable when the MME 22 desires to send the non-IP data to the UE 18 in step 3 of the procedure (see Figure 1). As such, there is a need for a mobile terminated NIDD procedure that efficiently handles delivery of non-IP data to UEs 18 having power saving capabilities.

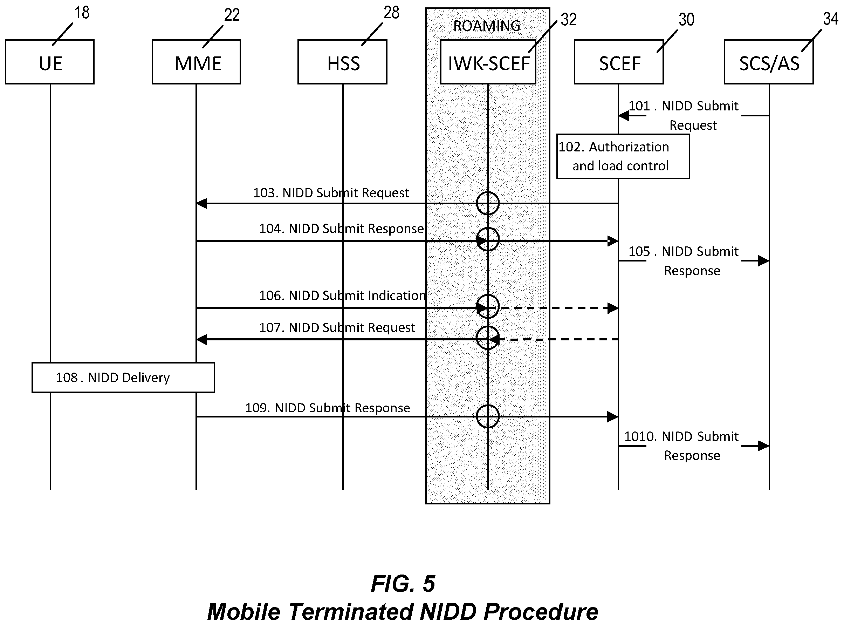

In this regard, **Figure 5** illustrates a mobile terminated NIDD procedure according to some embodiments of the present disclosure. More specifically, Figure 5 illustrates the procedure when the SCS/AS 34 sends non-IP data to a given user, or UE 18, as identified via an external identifier or Mobile Station International Subscriber Directory Number (ISDN) (MSISDN). This procedure assumes that procedures in 3GPP TS 23.682 V13.5.0, clause 5.13.1, are completed.

NOTE 1: The interactions with the SCS/AS 34 (e.g., steps 1, 5, and 10 of Figure 5) are outside the scope of 3GPP and are shown for informative purposes only.

**Step 101:** If the SCS/AS 34 has already activated the NIDD service for a given UE 18, and has downlink non-IP data to send to the UE 18, the SCS/AS 34 sends a NIDD Submit Request (external Identifier or MSISDN, SCS/AS reference Identifier (ID), non-IP data) message to the SCEF 30.

**Step 102:** If a valid SCEF EPS bearer context corresponding to the external identifier or MSISDN included in step 101 of Figure 5 is found, then the SCEF 30 checks whether the SCS/AS 34 is authorized to send NIDD requests and that the SCS 34 has not exceeded its quota (e.g., 200 bytes in 24 hours) or rate (e.g., 10 bytes/hour) of data submission. If this check fails, the SCEF 30 sends a NIDD response with a cause value indicating the reason for the failure condition and the flow stops at this step. Otherwise, the flow continues with step 103.

If no valid SCEF EPS bearer context is found, then the SCEF 30, depending on the configuration, may either:
- send a NIDD response with the appropriate error cause value. The flow stops at this step; or
- perform device triggering towards the UE 18 (using a T4 Short Message Service (SMS) trigger, refer to 3GPP TS 23.682, clause 5.2.2) to establish a non-IP PDN connection towards the SCEF 30. In this case, step 106 with an appropriate cause value is executed; or
- accept the NIDD submit request and execute step 106 with an appropriate cause value, and wait for the UE 18 to perform a procedure (see 3GPP TS 23.401 V13.6.0) causing the establishment of a PDN connection to the SCEF 30 (see 3GPP TS 23.682, clause 5.13.1.2).

NOTE 2: The duration for which the SCEF 30 may wait for establishment of a PDN connection to the SCEF 30 for the given UE 18 is implementation dependent.

**Step 103:** If a valid SCEF EPS bearer context corresponding to the external ID or MSISDN included in step 101 is found, then the SCEF 30 sends a NIDD Submit Request (user ID, EPS bearer ID, SCEF ID, non-IP data) message toward the MME 22. The SCEF 30 (or IWK-SCEF 32 if in the path) buffers the received non-IP data. The SCEF 30 / IWK-SCEF 32 sends a NIDD Submit Request message with a copy of the non-IP data to the MME 22.

If the IWK-SCEF 32 receives a NIDD Submit Request message from the SCEF 30, it buffers the non-IP data and relays the message to the MME 22.

**Step 104:** If the MME 22 can immediately deliver the non-IP data to the UE 18, the procedure proceeds at step 108. If the UE 18 is in a power saving state and the MME 22 cannot immediately deliver the data to the UE 18, the MME 22 sends a NIDD Submit Response (downlink buffering duration time) message towards the SCEF 30 / IWK-SCEF 32 to indicate that data was not delivered to the UE 18. The indication may e.g. be a "downlink buffering duration time" as exemplified, but it may be any suitable information capable to indicate that data was not delivered to the UE 18. The MME 22 stores a new value for the downlink SCEF buffer expiration time in the MM context for the UE 18 based on the downlink buffering duration time. The MM context is described in 3GPP TS 23.401, Section 5.7.2, and a row exists for the corresponding buffer time via the SGW "DL Data Buffer Expiration Time." Note that the buffer time may be decided by local policies in the MME 22, based on the sleep time of the UE 18, by subscription or other information such as load. The MME 22 provides the buffer time to the SCEF 30 / IWK-SCF 32 thereby informing the SCEF 30 / IWK-SCEF 32 of the duration of time to buffer the non-IP data.

The SCEF 30 / IWK-SCEF 32 that receives a downlink buffering duration time in a NIDD Submit Response message may store a new value for the downlink data buffer expiration time based on the downlink buffering duration time and does not send any additional NIDD Submit Requests if subsequent NIDD Submit Requests are received in the SCEF 30 / IWK-SCEF 32 before the downlink data buffer expiration time has expired for the UE 18.

If the IWK-SCEF 32 received the NIDD Submit Response from the MME 22, it may send a NIDD Submit Response (downlink buffering duration time) message to the SCEF 30 indicating that data was not yet delivered to the UE 18 and that data has been buffered and a new delivery will be attempted when the UE 18 becomes reachable, i.e. within the 'downlink buffering duration time.'

**Step 105:** The SCEF 30 may send a NIDD Submit Response to the SCS/AS 34 informing of the delayed delivery and the latest time for expected delivery.

**Step 106:** When the MME 22 detects that the UE 18 has become reachable and data can be delivered to the UE 18, the MME 22 sends a NIDD Submit Indication towards the SCEF 30 / IWK-SCEF 32 indicating that the UE 18 is reachable.

**Step 107:** The SCEF 30 / IWK-SCEF 32 sends the buffered data in a NIDD Submit Request message to the MME 22. This is done in response to receiving the NIDD Submit Indication sent by the MME 22 in step 106.

**Step 108:** The MME 22 delivers the non-IP data to the UE 18, preferably using data transfer via the MME procedure as described in 3GPP TS 23.401 V13.6.0, clause 5.3.4B.3. Depending on operator configuration, the SCEF 30 / IWK-SCEF 32 may generate the necessary accounting information required for charging.

NOTE 3: The successful result does not imply the data is successfully received at the UE 18, but just the UE 18 has responded to paging and it is reachable.

**Step 109:** The MME 22 confirms the result towards the SCEF 30. The IWK-SCEF 32 may perform charging procedures for the NIDD delivery. The buffer in the IWK-SCEF 32 / SCEF 30 is emptied when data has been delivered or when no further buffering is indicated by a new downlink buffering duration time.

**Step 1010:** The SCEF 30 confirms the transfer towards the SCS/AS 34.

NOTE 4: From the MME 22 point of view, the peer node on the T6a interface handles the buffering. That is, the SCEF 30 in the non-roaming case and the IWK-SCEF 32 in the roaming case. When a SCEF 30 is using the T7 interface, it is the IWK-SCEF 32 that handles the buffering.

NOTE 5: Steps 104-108 may be repeated if a delivery attempt (step 108) for some reason fails.

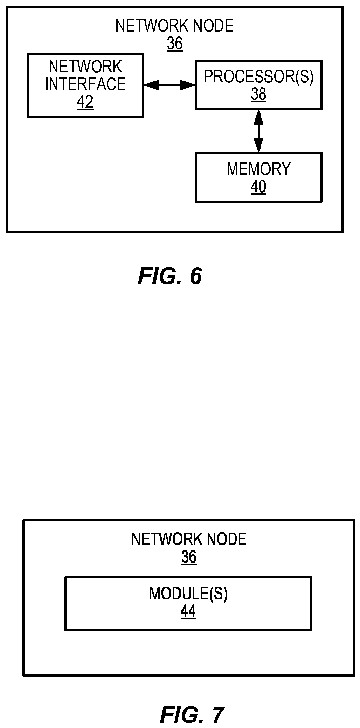

**Figure 6** is a schematic block diagram of a network node 36 according to some embodiments of the present disclosure. Here, the network node 36 may be a core network node such as, for example, the MME 22, the SCEF 30, the IWK-SCEF 32, or the SCS/AS 34. As illustrated, the network node 36 includes one or more processors 38 (e.g., Central Processing Units (CPUs), Application Specific Integrated Circuits (ASICs), Field Programmable Gate Arrays (FPGAs), and/or the like), memory 40, and a network interface 42. In some embodiments, the functionality of the network node 36 (e.g., the functionality of the MME 22, the functionality of the SCEF 30, the functionality of the IWK-SCEF 32, or the functionality of the SCS/AS 34) described above may be fully or partially implemented in software that is, e.g., stored in the memory 40 and executed by the processor(s) 38.

In some embodiments, a computer program including instructions which, when executed by at least one processor, causes the at least one processor to carry out the functionality of a network node according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

**Figure 7** is a schematic block diagram of the network node 36 according to some other embodiments of the present disclosure. The network node 36 includes one or more modules 44, each of which is implemented in software. The module(s) 44 provide the functionality of the network node 36 described herein. As an example, if the network node 36 is the MME 22, then the module(s) 44 may include a reception module operable to receive a NIDD submit request, a response module operable to send a NIDD submit response, an indication module operable to send a NIDD submit indication, and a delivery module operable to perform NIDD delivery, as described above. As another example, if the network node 36 is the SCEF 30, the module(s) 44 may include a request reception module operable to receive a NIDD submit request, a request transmission module operable to send a NIDD submit request, a response reception module operable to receive a NIDD submit response, a response transmission module operable to transmit a NIDD submit response, and an indication reception module operable to receive a NIDD submit indication, as described above. As a final example, if the network node 36 is the SCS/AS 34, the module(s) 44 may include a request transmission module operable to send a NIDD submit request and a response reception module operable to receive a NIDD submit response, as described above.

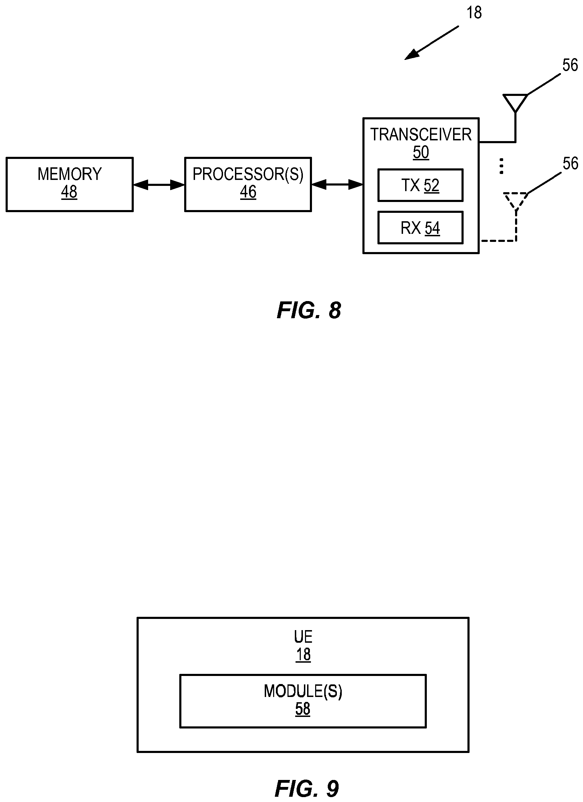

**Figure 8** is a schematic block diagram of the UE 18 (or more generally a wireless device) according to some embodiments of the present disclosure. As illustrated, the UE 18 includes one or more processors 46 (e.g., CPUs, ASICs, FPGAs, and/or the like), memory 48, and one or more transceivers 50 each including one or more transmitter 52 and one or more receivers 54 coupled to one or more antennas 56. In some embodiments, the functionality of the UE 18 described above may be fully or partially implemented in software that is, e.g., stored in the memory 48 and executed by the processor(s) 46.

In some embodiments, a computer program including instructions which, when executed by at least one processor, causes the at least one processor to carry out the functionality of the UE 18 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

**Figure 9** is a schematic block diagram of the UE 18 (or more generally a wireless device) according to some other embodiments of the present disclosure. The UE 18 includes one or more modules 58, each of which is implemented in software.

The module(s) 58 provide the functionality of the wireless device 18 (e.g., UE) described herein.

While not being limited to or by any particular advantage, some examples of advantages provided by embodiments of the present disclosure are as follows. The present disclosure supports high latency communication (i.e., it can handle/support PSM and eDRX) for NIDD over the SCEF 30. The present disclosure provides a way to give prompt acknowledgement to the SCS/AS 34. The feedback may also include a time for how long it is expected (at the most) before a device will be reachable and the message can be delivered to the device. The present disclosure describes how mobile terminated (i.e., downlink) data can be delivered without losses for mobile devices (i.e., devices that cross a MME service area while sleeping).

Some non-limiting embodiments/features that are disclosed herein are:
- NIDD Submit Indication (Figure 5, step 106) (new message) to trigger the SCEF 30 / IWK-SCEF 32 to send its buffered data in a NIDD Submit Request.
- Buffering in the SCEF 30 / IWK-SCEF 32 (new concept including signaling (Figure 5, steps 4, 6, and 7) to manage the buffered data.
- "Downlink buffering duration time" in a NIDD submit response message (new parameter in NIDD submit response).
- The timer "downlink data buffer expiration time" used in the SCEF 30 / IWK-SCEF 32 to control buffering time.
- The timer "downlink SCEF buffer expiration time" used in the MME 22 to control the buffering handling (in the MM context for the UE 18).
- The SCEF 30 including a "latest time for expected delivery" in the NIDD response message sent to the SCS/AS 34 when informing of the delayed delivery.
- Emptying the buffer in the IWK-SCEF 32 / SCEF 30 at the NIDD Submit Response (Figure 5, step 109) when data has been delivered or when no more delivery attempts are tried (i.e., no further buffering is indicated by a new downlink buffering duration time, i.e. the cycle of steps 4-8 may be repeated if a delivery attempt fails).

The following acronyms are used throughout this disclosure.
- 3GPP: Third Generation Partnership Project
- 5G: Fifth Generation
- AS: Application Server
- ASIC: Application Specific Integrated Circuit
- CIoT: Cellular Internet of Things
- CPU: Central Processing Unit
- DRX: Discontinuous Reception
- eDRX: Extended Discontinuous Reception
- eNB: Enhanced or Evolved Node B
- EPC: Evolved Packet Core
- EPS: Evolved Packet System
- E-UTRAN: Enhanced or Evolved Universal Terrestrial Radio Access Network
- FPGA: Field Programmable Gate Array
- HSS: Home Subscriber Server
- ID: Identifier
- IP: Internet Protocol
- ISDN: International Services Digital Network
- IWK-SCEF: Inter-Working Service Capability Exposure Function
- LTE: Long Term Evolution
- MME: Mobility Management Entity
- MO: Mobile Originating
- MSISDN: Mobile Station International Subscriber Directory Number
- MTC: Machine Type Communication
- NAS: Non-Access Stratum
- NIDD: Non-Internet Protocol Data Delivery
- PDCCH: Physical Downlink Control Channel
- PDN: Packet Data Network
- P-GW: Packet Data Network Gateway
- PO: Paging Occasion
- pRAU: Periodic Routing Area Update
- PSM: Power Saving Mode
- pTAU: Periodic Tracking Area Update
- RAN: Radio Access Network
- SCEF: Service Capability Exposure Function
- SCS: Service Capability Server
- S-GW: Serving Gateway
- SMS: Short Message Service
- TS: Technical Specification
- UE: User Equipment

Those skilled in the art will recognize improvements and modifications to the embodiments of the present disclosure. All such improvements and modifications are considered within the scope of the concepts disclosed herein.

## Claims

1. A method, in a Mobility Management Entity, MME, (22, 36), for delivery of non-Internet Protocol, non-IP, data, comprising:
receiving (103) a Non-Internet Protocol Data Delivery, NIDD, submit request comprising non-IP data and an identifier of a wireless device (18) to which the non-IP data is to be delivered;
upon determining that the wireless device (18) is not reachable, sending (104) a NIDD submit response that indicates that the non-IP data was not delivered to the wireless device (18); and
upon determining that the wireless device (18) is reachable, sending (106) a NIDD submit indication towards a Service Capability Exposure Function, SCEF, (30) or an Inter-Working SCEF, IWK-SCEF, (32) indicating that the wireless device (18) is reachable.

2. The method of claim 1 further comprising: subsequent to sending (106) the NIDD submit indication indicating that the wireless device (18) is reachable,
receiving (107) a second NIDD submit request comprising the non-IP data to be delivered to the wireless device (18); and
delivering (108) the non-IP data to the wireless device (18).

3. The method of any one of claim 1 or 2 wherein sending (104) the NIDD submit response comprises sending the response such that the response comprises a downlink buffering duration time.

4. The method of claim 3 further comprising storing a new value for a downlink buffer expiration time in a MM context for the wireless device (18) based on the downlink buffering duration time.

5. The method of any one of claim 1 to 4 wherein the MME (22, 36) comprises:
receiving (103) the NIDD submit request comprises receiving (103) the request from a Service Capability Exposure Function, SCEF, (30) or an Inter-Working SCEF, IWK-SCEF, (32); and
sending (104) the NIDD submit response comprises sending the response to the SCEF (30) or the IWK-SCEF (32).

6. A Mobility Management Entity, MME, (22, 36) for a cellular communications network (10), the MME (22, 36) providing delivery of non-Internet Protocol, non-IP, data and being adapted to operatively:
receive a Non-Internet Protocol Data Delivery, NIDD, submit request comprising non-IP data and an identifier of a wireless device (18) to which the non-IP data is to be delivered;
upon determining that the wireless device (18) is not reachable, send a NIDD submit response that indicates that the non-IP data was not delivered to the wireless device (18); and
upon determining that the wireless device (18) is reachable, send (106) a NIDD submit indication towards a Service Capability Exposure Function, SCEF, (30) or an Inter-Working SCEF, IWK-SCEF, (32) indicating that the wireless device (18) is reachable.

7. The Mobility Management Entity, MME, (22, 36) of claim 6, wherein the network node (22, 36) is further adapted to perform the method of any of claims 2 to 5.

## Patentansprüche

1. Verfahren in einer Mobilitätsverwaltungseinheit, MME, (22, 36) zum Bereitstellen von Nicht-Internetprotokoll-Daten, Nicht-IP-Daten, Folgendes umfassend:
Empfangen (103) einer Nicht-Internetprotokoll-Datenlieferungs-Übermittlungsanfrage, NIDD-Übermittlungsanfrage, umfassend Nicht-IP-Daten und eine Kennung einer drahtlosen Vorrichtung (18), an die die Nicht-IP-Daten geliefert werden sollen;
nach dem Bestimmen, dass die drahtlose Vorrichtung (18) nicht erreichbar ist, Senden (104) einer NIDD-Übermittlungsantwort, welche angibt, dass die Nicht-IP-Daten nicht an die drahtlose Vorrichtung (18) geliefert wurden; und
nach dem Bestimmen, dass die drahtlose Vorrichtung (18) erreichbar ist, Senden (106) einer NIDD-Übermittlungsangabe, welche angibt, dass die drahtlose Vorrichtung (18) erreichbar ist, an eine Service Capability Exposure Function, SCEF, (30) oder eine InterWorking-SCEF, IWK-SCEF, (32).

2. Verfahren nach Anspruch 1, ferner Folgendes umfassend: nach dem Senden (106) der NIDD-Übermittlungsangabe, die angibt, dass die drahtlose Vorrichtung (18) erreichbar ist,
Empfangen (107) einer zweiten NIDD-Übermittlungsanfrage umfassend die Nicht-IP-Daten, die an die drahtlose Vorrichtung (18) geliefert werden sollen; und
Liefern (108) der Nicht-IP-Daten an die drahtlose Vorrichtung (18).

3. Verfahren nach einem der Ansprüche 1 oder 2, wobei das Senden (104) der NIDD-Übermittlungsantwort das Senden der Antwort derart umfasst, dass die Antwort eine Downlink-Pufferzeitdauer umfasst.

4. Verfahren nach Anspruch 3, ferner umfassend das Speichern eines neuen Wertes für eine Downlink-Pufferablaufzeit in einem MM-Kontext für die drahtlose Vorrichtung (18) basierend auf der Downlink-Pufferzeitdauer.

5. Verfahren nach einem der Ansprüche 1 bis 4, wobei die MME (22, 36) Folgendes umfasst:
das Empfangen (103) der NIDD-Übermittlungsanfrage umfasst das Empfangen (103) der Anfrage von einer Service Capability Exposure Function, SCEF, (30) oder einer InterWorking-SCEF, IWK-SCEF, (32); und
das Senden (104) der NIDD-Übermittlungsantwort umfasst das Senden der Antwort an die SCEF (30) oder die IWK-SCEF (32).

6. Mobilitätsverwaltungseinheit, MME, (22, 36) für ein zellulares Kommunikationsnetz (10), wobei die MME (22, 36) das Liefern von Nicht-Internetprotokoll-Daten, Nicht-IP-Daten, vorsieht und angepasst ist zum funktionsmäßigen:
Empfangen einer Nicht-Internetprotokoll-Datenlieferungs-Übermittlungsanfrage, NIDD-Übermittlungsanfrage, umfassend Nicht-IP-Daten und eine Kennung einer drahtlosen Vorrichtung (18), an die die Nicht-IP-Daten geliefert werden sollen;
nach dem Bestimmen, dass die drahtlose Vorrichtung (18) nicht erreichbar ist, Senden einer NIDD-Übermittlungsantwort, welche angibt, dass die Nicht-IP-Daten nicht an die drahtlose Vorrichtung (18) geliefert wurden; und
nach dem Bestimmen, dass die drahtlose Vorrichtung (18) erreichbar ist, Senden (106) einer NIDD-Übermittlungsangabe, welche angibt, dass die drahtlose Vorrichtung (18) erreichbar ist, an eine Service Capability Exposure Function, SCEF, (30) oder eine InterWorking-SCEF, IWK-SCEF, (32).

7. Mobilitätsverwaltungseinheit, MME, (22, 36) nach Anspruch 6, wobei der Netzknoten (22, 36) ferner angepasst ist, das Verfahren nach einem der Ansprüche 2 bis 5 auszuführen.

## Revendications

1. Procédé, dans une entité de gestion de mobilité, MME, (22, 36), pour la distribution de données non-protocole internet, non-IP, comprenant :
la réception (103) d'une demande de présentation de distribution de données non-protocole internet, NIDD, comprenant des données non-IP et un identificateur d'un dispositif sans fil (18) auquel les données non-IP doivent être distribuées ;
lorsqu'on détermine que le dispositif sans fil (18) n'est pas joignable, l'envoi (104) d'une réponse de présentation NIDD qui indique que les données non-IP n'ont pas été distribuées au dispositif sans fil (18) ; et
lorsqu'on détermine que le dispositif sans fil (18) est joignable, l'envoi (106) d'une indication de présentation NIDD en direction d'une fonction d'exposition de capacité de service, SCEF, (30) ou d'une SCEF d'interfonctionnement, IWK-SCEF, (32) indiquant que le dispositif sans fil (18) est joignable.

2. Procédé selon la revendication 1 comprenant en outre : à la suite de l'envoi (106) de l'indication de présentation NIDD indiquant que le dispositif sans fil (18) est joignable,
la réception (107) d'une deuxième demande de présentation NIDD comprenant les données non-IP à distribuer au dispositif sans fil (18) ; et la distribution (108) des données non-IP au dispositif sans fil (18).

3. Procédé selon l'une quelconque parmi la revendication 1 ou 2 dans lequel l'envoi (104) de la réponse de présentation NIDD comprend l'envoi de la réponse de telle sorte que la réponse comprend une durée de mise en tampon de liaison descendante.

4. Procédé selon la revendication 3 comprenant en outre le stockage d'une nouvelle valeur pour un délai d'expiration de tampon de liaison descendante dans un contexte MM pour le dispositif sans fil (18) sur la base de la durée de mise en tampon de liaison descendante.

5. Procédé selon l'une quelconque des revendications 1 à 4, dans lequel le MME (22, 36) comprend :
la réception (103) de la demande de présentation NIDD comprend la réception (103) de la demande depuis une fonction d'exposition de capacité de service, SCEF, (30) ou une SCEF d'interfonctionnement, IWK-SCEF, (32) ; et
l'envoi (104) de la réponse de présentation NIDD comprend l'envoi de la réponse à la SCEF (30) ou à l'IWK-SCEF (32).

6. Entité de gestion de mobilité, MME, (22, 36) pour un réseau de communications cellulaire (10), la MME (22, 36) assurant la distribution de données non-protocole internet, non-IP, et étant conçue pour opérationnellement :
recevoir une demande de présentation de distribution de données non-protocole internet, NIDD, comprenant des données non-IP et un identificateur d'un dispositif sans fil (18) auquel les données non-IP doivent être distribuées ;
lorsqu'on détermine que le dispositif sans fil (18) n'est pas joignable, l'envoi d'une réponse de présentation NIDD qui indique que les données non-IP n'ont pas été distribuées au dispositif sans fil (18) ; et
lorsqu'on détermine que le dispositif sans fil (18) est joignable, l'envoi (106) d'une indication de présentation NIDD en direction d'une fonction d'exposition de capacité de service, SCEF, (30) ou d'une SCEF d'interfonctionnement, IWK-SCEF, (32) indiquant que le dispositif sans fil (18) est joignable.

7. Entité de gestion de mobilité, MME, (22, 36) selon la revendication 6, dans laquelle le noeud de réseau (22, 36) est conçu en outre pour mettre en oeuvre le procédé selon l'une quelconque des revendications 2 à 5.
